# EUROPEAN PATENT APPLICATION

(11) **EP 4 353 410 A1**
(43) Date of publication of application: **17.04.2024**
(21) Application number: 22200999.5
(22) Date of filing: 12.10.2022
(51) Int. Cl.: B24B 9/00, B24B 23/08, B24B 49/10, B24B 27/00, B23C 3/12, B23Q 9/00

(54) **BEVELING MACHINE WITH AUTOMATIC FEED**

(71) Applicant: Promotech Sp. Z.o.o., 15-620 Bialystok (PL)
(72) Inventor: Golabiewski, Zbigniew, 15-613 Bialystok (PL); Zmiejko, Adrian, 15-635 Klepacze (PL); Galar, Mariusz, 15-365 Bialystok (PL); Pogorzelski, Piotr, 18-100 Lapy (PL)
(74) Representative: Jedrzejewski, Michal

(57) **Abstract**

A beveller with automatic feed composed of two main units: a feed unit (1) and a cutting unit (2), which comprises the feed unit (1) comprises a main body (3) which contains:
1) a motoreducer (4) which drives at least three sets of drive rollers (6) via a two-stage chain transmission (5);
2) connectors (7) which constitute a body for a pressure plate (8) provided with at least three sets of pressure rollers (9) and for a "bolt-nut" mechanism (10) and which serve to assemble a holder (11) to which the cutting unit (2) is attached, in addition there are slotted holes (12) in the connectors which allow the cutting unit (2) to be moved in the vertical axis in order to allow the bottom edge of thick metal sheets to be cut,
3) inductive sensors (13), detecting the presence of the material to be machined, which function to assist the operator in installing the machine on the material and then in stopping the feed when the machining is complete,
4) front guides (26) attached to the main body (3).

## Description

The object of the invention is a beveller with automatic feed.

An automatic beveller for steel pipes consisting of a frame, wherein there is a bevelling device at the two ends of the frame for bevelling the end part of the steel pipe, is known from the state of the art and disclosed in document CN201760673. The bevelling device is located on a sliding rail stand which is provided with multiple roller guides for seating the steel pipe. The rollers are connected to each other via a guiding device which is driven by a stepper motor. The fully automatic beveller for steel pipes according to utility model can substantially relieve the operator's workload and has the functions of saving cost, promoting efficiency and increasing company profit.

Document CN102689188 discloses a bevelling machine which is used to cut steel sheets and bevelling workpieces before welding, and in particular relates to the structure of the base of the bevelling machine. The base consists of a roller support, where four rollers are connected under the roller support; four bolts are arranged on the roller support in a penetrating manner; a backing plate is located on top of the roller support; each bolt is inserted into the backing plate in a penetrating manner and is connected by thread to the top nut and the bottom nut; each bottom nut is located between a padding plate and the roller support; each top nut is located above the padding plate; a thick spring and a thin spring are respectively located on each bolt; each thick spring is located between the padding plate and the bottom nut corresponding to the thick spring; and each thin spring is located between the padding plate and the top nut corresponding to the thin spring. When in operation, the beveller is mounted on the base and the rollers below the base roll forward under the gravitational action of the beveller, so that the automatic feed is achieved without affecting the length and weight of the plate; a The flexibility of the springs can allow the beveller to be automatically adjusted up and down.

Document KR20160139714 discloses an automatic beveller for steel sheets. The automatic beveller for steel sheets consists of: a frame structure (100) which is formed by connecting a series of vertical and horizontal frames together; a chamfering section (200) which is attached to the frame structure (100); and pairs of roller tables (300a, 300b) which are connected to the front and rear ends of the chamfering section (200) to allow the steel sheet to be placed therein and discharged to the outside.

Document KR20160055297 discloses an automatic chamfering machine which consists of: a main body which has a bottom plate, an outer wall and a cover; a horizontally movable frame which is formed in one inner side of the main body; an angle adjustment frame which is formed inside the horizontally movable frame; a fastening member which is coupled to a first fastening hole in the bottom part of the horizontally moving plate of the horizontally moving frame and a second fastening hole in the bottom part of the angle adjustment plate of the angle adjustment frame; a chamfering section which is formed inside the angle adjustment frame and has a chamfering cutter and a chamfering motor; a weight which is formed in the other inner side of the main body and maintains the weight balance; an automatic transmission section which is formed inside the main body and has a drive motor, reducer, multiple drive wheels and connecting members; a guiding roller section that is formed in the bottom part of the outer wall of the main body and has a roller and multiple rotating elements; and a dashboard that is formed inside the main body and has a limit switch, an operating panel, a control section and a drive motor connected to various motors and a safety device connected to the chamfering motor.

The solutions known from the state of the art do not ensure an even chamfer and a constant and even guidance of the material to be machined, in particular without a guide, and automatic stopping at the ends of the metal sheets to be machined.

Unexpectedly, the above problems are solved by the beveller with automatic feed which is the object of the present invention.

A beveller with automatic feed composed of two main units: a feed unit and a cutting unit, according to the invention, is characterised in that the feed unit comprises a main body which contains:
1) a motoreducer which drives at least three sets of drive rollers via a two-stage chain transmission;
2) connectors which constitute a body for a pressure plate provided with at least three sets of pressure rollers and for a "bolt-nut" mechanism and which serve to assemble a holder to which the cutting unit is attached, in addition there are slotted holes in the connectors which allow the cutting unit to be moved in the vertical axis in order to allow the bottom edge of thick metal sheets to be cut,
3) inductive sensors, detecting the presence of the material to be machined, which function to assist the operator in installing the machine on the material and then in stopping the feed when the machining is complete,
4) front guides attached to the main body.

Furthermore, the feed unit is provided with a control panel attached to the main body. The cutting unit, in turn, comprises an electric motor which, via an angular transmission, drives a spindle on which the tool is fitted. A yoke, together with a nut, a bolt and a holder connector, is attached to the angular transmission. Furthermore, each set of drive rollers and each set of pressure rollers consists of a conical roller and a cylindrical support roller, the axes of the conical rollers being horizontally offset from each other by 0.5 - 2°. Furthermore, an angular guide, which connects to a set-block, is connected to a motor holder, the angular guide being provided with a movable locking key with a locking bolt screwed in.

Preferably, the rollers are made of plastic, in particular polyurethane.

Preferably, a plunge adjustment knob is attached to the motor holder, the former being connected to a lock which loosens a pressure stone by means of a tension member.

Preferably, the control panel is attached to the main body of the feed unit via an extension arm.

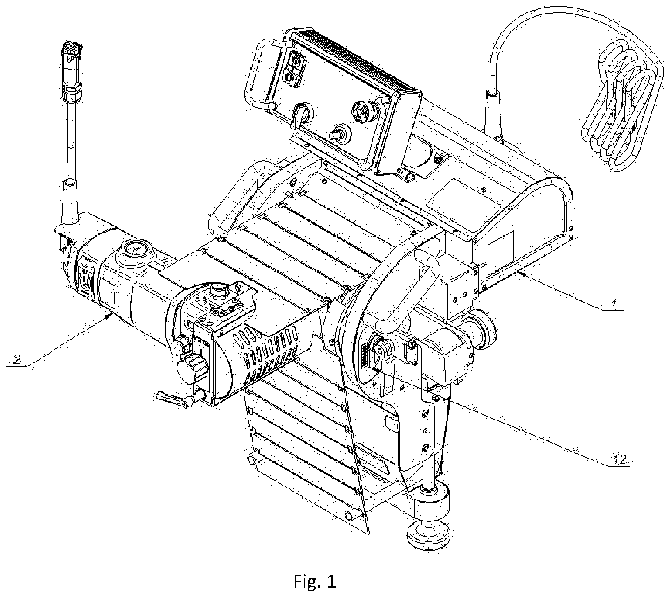

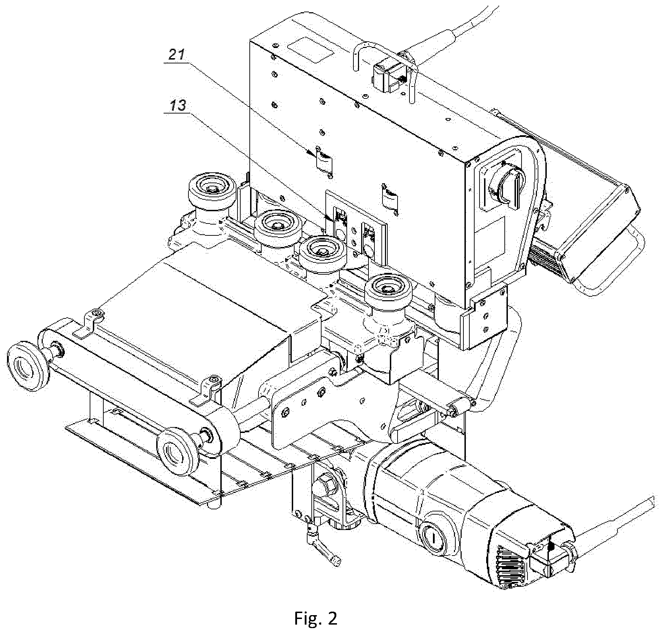

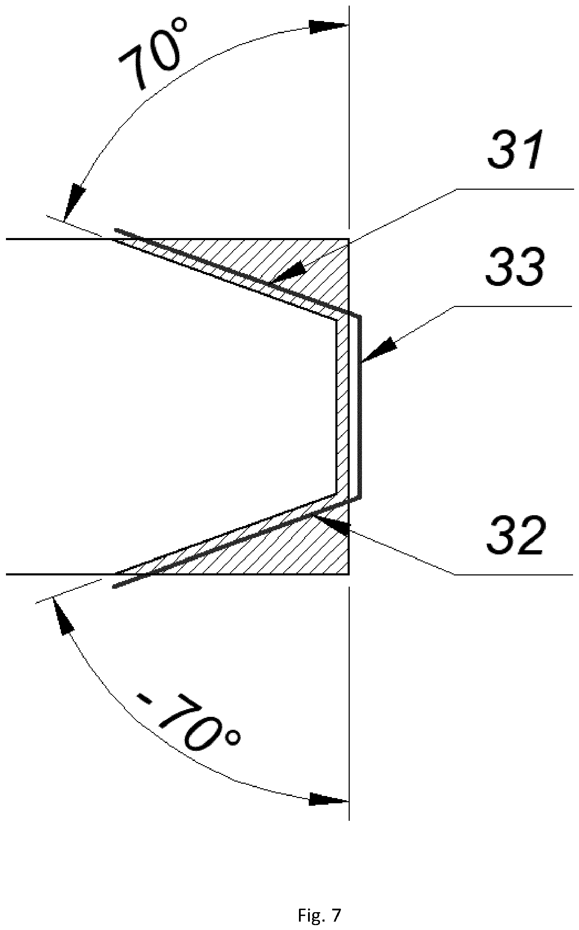

An embodiment of the invention is shown in the drawing in which Fig. 1 shows a beveller in an axonometric view, Fig. 2 - the beveller in an angled view from below, Fig. 3 - the interior of a cutting unit, Fig. 4 - sets of drive rollers and pressure rollers, Fig. 5 - an arrangement of the sets of drive rollers, Fig. 6 - a diagram of a plunge adjustment system, and Fig. 7 - a diagram of a machining angle setting.

A beveller with automatic feed composed of two main units:
1) a feed unit (1) the function of which is to ensure that the machine moves along the edge of the metal sheet in such a way as to produce an even chamfer along the full length of the edge to be machined, and to adjust steplessly the angle of the chamfer between -70° and 70°;
2) a cutting unit (2) the function of which is to drive the tool (cutting head) and to adjust the plunge of the tool (18);

The feed unit (1) comprises a main body (3) which contains:
1) a motoreducer (4) which drives at least three sets of drive rollers (6) via a two-stage chain transmission (5);
2) connectors (7) which constitute a body for a pressure plate (8) provided with at least three sets of pressure rollers (9) and for a "bolt-nut" mechanism (10) and which serve to fix the beveller rigidly onto the metal sheet and to ensure the required trajectory. A holder (11), to which the cutting unit (2) is attached, is also mounted to the connectors (7). There are slotted holes (12) in the connectors which allow the cutting unit (2) to be moved in the vertical axis in order to allow the bottom edge of metal sheets up to 60 mm in thickness to be cut,
3) inductive sensors (13), detecting the presence of the material to be machined, which function to assist the operator in installing the machine on the material and then in automatically stopping the feed when the machining is complete;
4) front guides (26) attached to the main body (3), the main task of which is to guide the machine freely along the front of the metal sheet and to help in maintaining the set machining parameters.

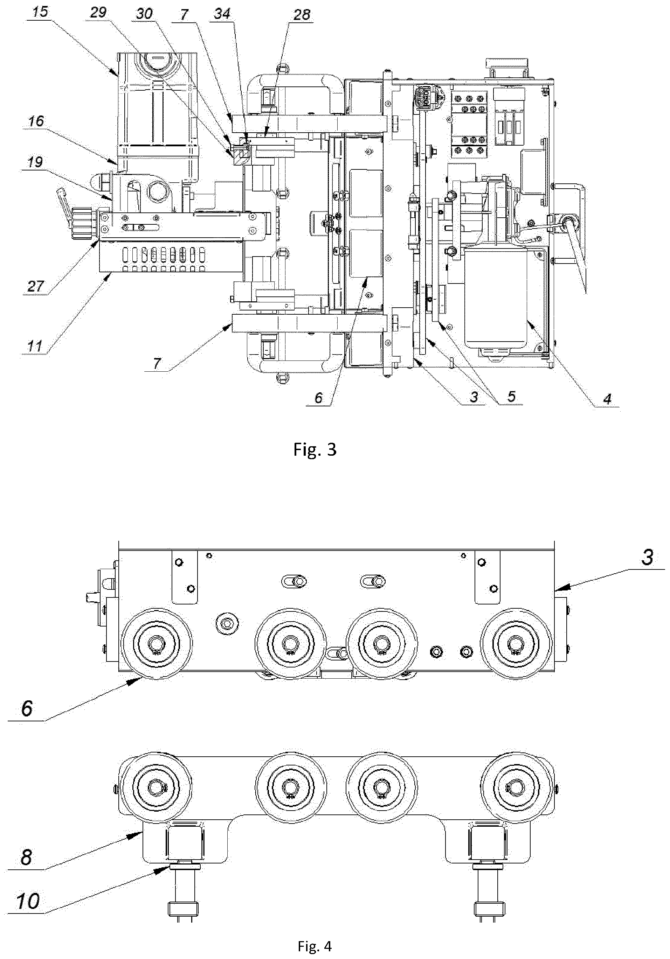

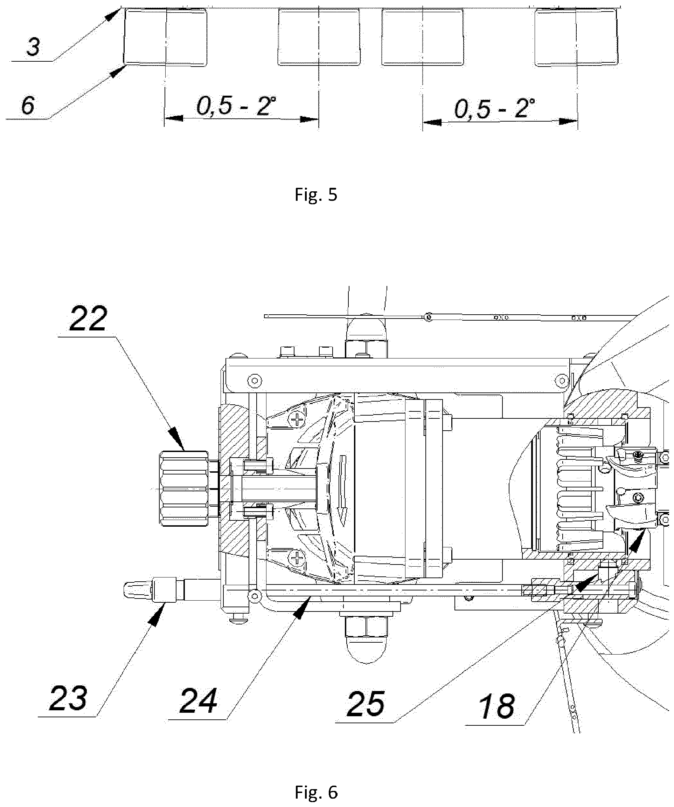

Each set of drive rollers (5) and each set of pressure rollers consists of a conical roller (20) and a cylindrical support roller (21). Each of these rollers (20, 21) is made of plastic, in particular polyurethane, which, when pressed, adapts in shape to the surface being pressed, dampens the vibrations associated with the process, which has a positive effect on the components of the machine and increases the adhesion of the machine to the material being machined. The axes of the conical rollers (20) are horizontally offset from each other by 1° (similar results are obtained for an offset of 0.5 - 2°). The conical rollers (20) have the task of tensioning (pressing) the metal sheet during the installation of the beveller on the material to be machined, which results in increased rigidity. The arrangement of the conical rollers (20) as shown in figs 4 and 5 above allows the edge to be machined along its entire length without the use of additional guides.

The feed unit is provided with a control panel (14), attached to the main body (3) of the feed unit (1) via an extension arm. By means of the control panel (14), the operator activates the rotation of the cutting unit, selects the direction and adjusts the feed speed, and by means of a display, in a graphic form, receives information on: the load on the cutting unit motor, the feed direction, overloads, and the presence of the material to be machined.

The cutting unit (2) comprises an electric motor (15) (single-phase with a power of 2200W) which, via an angular transmission (16), drives a spindle (17) on which the tool (cutting head) (18) is fitted, wherein a yoke (19), together with a nut, a bolt and a holder connector (27), is attached to the angular transmission (16). These elements act as a link between the motor (15) and the holder (11) of the motor (15) and enable adjustment of the plunge of the tool in the material to be machined.

The cutting unit is also characterised by an operator-safe method of changing the cutting head plunge, as well as by a system for securing the plunge setting. The plunge adjustment knob (22) is attached to the holder (11) of the motor (15). It can be used to set values after releasing a lock (23) which, by means of a tension member (24), loosens a pressure stone (25). This whole system ensures simple and safe operation at a distance from the working zone of the cutting head.

Thanks to this structure, the beveller according to the invention moves along the material to be machined and automatically stops at the ends of metal sheets (thanks to the inductive sensors assisting the operator). The conical drive rollers (20), which are set at an angle, ensure continuous contact between the front rollers and the front of the metal sheet on which they guide the beveller. As a result, the beveller produces an even chamfer. Constant and even guidance has a positive effect on the machining parameters. Through these rollers, which are set at an angle, the beveller is constantly pressing against the metal sheet. In the known solutions, the roller axes are positioned perpendicular to the direction of travel and, as a result, an additional guide has usually been needed until now.

The machine is able to machine the material while running in both directions. It is possible to machine any set angle from 70° to 0° (31) and from 0° to -70° (32). When machining the front (33) of the metal sheet (i.e. 0°), the machine can cut the material in both directions, without plunge correction. Any angle setting is possible thanks to an angular guide (28) which is connected to the holder (11) of the motor (15), and thanks to a set-block (29). By releasing a locking bolt (30) (which is screwed into a locking key (34) movable in the angular guide (28)), the operator can set the angle of the material to be machined in any manner.

Thanks to its structure, the beveller according to the invention is characterised by the following features:
1) The beveller has the ability to stop automatically at the end of the metal sheet when cutting is complete (a system which assists the beveller operator);
2) The beveller can operate without any guide which would need to be repositioned from time to time;
3) The beveller can work on curved metal sheets. For example, if a strip of metal sheet (about 12m) laid on several supports is being machined, the sections between them will hang down, the beveller according to the invention is able to work under such conditions.
4) The beveller has an operator-safe system for adjusting and locking the plunge.

## Claims

1. A beveller with automatic feed composed of two main units: a feed unit (1) and a cutting unit (2), **characterised in that** the feed unit (1) comprises a main body (3) which contains:
1) a motoreducer (4) which drives at least three sets of drive rollers (6) via a two-stage chain transmission (5);
2) connectors (7) which constitute a body for a pressure plate (8) provided with at least three sets of pressure rollers (9) and for a "bolt-nut" mechanism (10) and which serve to assemble a holder (11) to which the cutting unit (2) is attached, in addition there are slotted holes (12) in the connectors which allow the cutting unit (2) to be moved in the vertical axis in order to allow the bottom edge of thick metal sheets to be cut,
3) inductive sensors (13), detecting the presence of the material to be machined, which function to assist the operator in installing the machine on the material and then in stopping the feed when the machining is complete,
4) front guides (26) attached to the main body (3), furthermore, the feed unit is provided with a control panel (14) attached to the main body (3) of the feed unit (1), the cutting unit (2), in turn, comprises an electric motor (15) which, via an angular transmission (16), drives a spindle (17) on which a cutting head (18) is fitted, a yoke (19), together with a nut, a bolt and a holder connector, is attached to the angular transmission (16), furthermore, each set of drive rollers (5) and each set of pressure rollers consists of a conical roller (20) and a cylindrical support roller (21), the axes of the conical rollers (20) being horizontally offset from each other by 0.5 - 2°, furthermore, an angular guide (28), which connects to a set-block (29), is connected to the holder (11) of the motor (15), the angular guide being provided with a movable locking key (34) with a locking bolt (30) screwed in.

2. The beveller according to claim 1, **characterised in that** the rollers (20, 21) are made of plastic, in particular polyurethane.

3. The beveller according to one of claims 1 to 2, **characterised in that** a plunge adjustment knob (22) is attached to the holder (11) of the motor, the former being connected to a lock (23) which loosens a pressure stone (25) by means of a tension member (24).

4. The beveller according to one of claims 1 to 3, **characterised in that** the control panel (14) is attached to the main body (3) of the feed unit (1) via an extension arm.
